# EUROPÄISCHE PATENTANMELDUNG

(11) **EP 3 637 606 A1**
(43) Veröffentlichungstag der Anmeldung: **15.04.2020**
(21) Anmeldenummer: 18199104.3
(22) Anmeldetag: 08.10.2018
(51) Int. Cl.: H02M 5/458, H02M 7/493

(54) **ANTRIEBSSYSTEM MIT EINER VIELZAHL VON UMRICHTERN**

(71) Anmelder: Siemens Aktiengesellschaft, 80333 München (DE)
(72) Erfinder: Schwimmbeck, Franz, 94099 Ruhstorf (DE); Kraus, Ludwig, 94099 Ruhstorf (DE); von Zimmermann, Moritz, 91052 Erlangen (DE)

(57) **Zusammenfassung**

Die Erfindung betrifft ein Antriebssystem (1) aufweisend
- eine elektrische Maschine (2) mit mindestens einem Wicklungssystem und
- mindestens zwei Umrichter (3),
wobei die Umrichter (3) mit dem Wicklungssystem der elektrischen Maschine (2) verbunden sind. Zur Verbesserung des elektrischen Antriebssystems (10) wird vorgeschlagen, dass das Antriebssystem (1) eine Common-Mode Drossel (4) aufweist, die derart in Reihe zu den Umrichtern (3) angeordnet ist, dass die Magnetfelder in der Common-Mode Drossel (4) hervorgerufen durch die einzelnen gleichphasigen Anteile der Ströme (i₁,...,iₙ) durch die jeweiligen Umrichter (2) zumindest teilweise kompensiert werden. Ferner betrifft die Erfindung eine Windkraftanlage (10) mit einem derartigen Antriebssystem, wobei die elektrische Maschine (2) als Generator ausgebildet ist. Die Erfindung betrifft weiter ein Verfahren zum Betreiben eines derartigen Antriebssystems (1) oder einer derartigen Windkraftanlage (10), wobei die Umrichter (3) oder zumindest Teile der Umrichter (3), insbesondere die netzseitigen Stromrichter (31) der jeweiligen Umrichter (3), versetzt getaktet werden.

## Beschreibung

Die Erfindung betrifft ein Antriebssystem aufweisend eine elektrische Maschine mit mindestens einem Wicklungssystem und mindestens zwei Umrichter, wobei die Umrichter mit dem Wicklungssystem der elektrischen Maschine verbunden sind. Ferner betrifft die Erfindung eine Windkraftanlage mit einem derartigen Antriebssystem. Die Erfindung betrifft weiter ein Verfahren zum Betreiben eines derartigen Antriebssystems oder einer derartigen Windkraftanlage.

Es gibt Antriebssystem, bei denen eine elektrische Maschine durch mehrere Umrichter gespeist wird. Die Umrichter sind dabei parallel angeordnet, so dass sich die Ströme überlagern und in der elektrischen Maschine das Drehmoment bzw. die Leistung erhöhen. Dabei ist darauf zu achten, dass die Ströme in erster Linie zwischen den Umrichtern und der elektrischen Maschine fließen und es nicht zu Wechselwirkungen, zum Beispiel Ausgleichsströme zwischen den Umrichtern kommt. Die störenden Ausgleichsströme erhöhen Verluste in den Umrichtern bzw. erfordern eine größere Dimensionierung der Stromrichter ohne einen nennenswerten Nutzen für das Antriebssystem zu bringen. Die Ausgleichsströme werden oftmals auch als Kreisströme bezeichnet, da sie sich kreisförmig zwischen den Umrichtern ausbilden.

Eine typische Anwendung für eine elektrische Maschine, die durch mehrere Umrichter gespeist wird, ist eine Windkraftanlage. Die elektrische Maschine ist dabei als Generator ausgebildet. Insbesondere kann der Generator als Synchrongenerator oder als Asynchrongenerator ausgebildet sein.

Eine einfache und bekannte Methode, Ausgleichsströme zu verhindern besteht darin, dass die parallel angeordneten Umrichter zeitgleich angesteuert werden. Das heißt, alle Schaltimpulse werden an die Umrichter zeitgleich übertragen. Somit verhalten sich die Umrichter bezüglich ihrer Ströme gleich und es kommt zu keinen Ausgleichströmen zwischen den Stromrichtern. Das zeitgleiche Ansteuern der Umrichter wird auch als synchrones Takten bezeichnet. Zusätzlich werden an den Umrichtern kleine Parallelschaltdrosseln angeordnet um Ausgleichströme, die dennoch, zwar nur in kleinem Ausmaße, entstehen können, noch zu begrenzen.

Durch das synchrone Takten der Umrichter addieren sich auch die störenden Oberschwingungen, die vom Energieversorgungsnetz ferngehalten werden müssen. Dafür kommt ein Netzfilter zum Einsatz, das diese Störungen beseitigt.

Eine weitere Möglichkeit besteht darin, dass die Umrichter unterschiedliche Wicklungssysteme der elektrischen Maschine, insbesondere des Generators, speisen. Dadurch entsteht zwischen den Umrichtern eine galvanische Trennung, die ebenfalls die Ausbildung von Ausgleichsströmen zwischen den Umrichtern verhindert. Dadurch kann auf das synchrone Takten, d.h. das zeitgleiche Ansteuern der Umrichter verzichtet werden. Die Umrichter werden zeitlich versetzt angesteuert, so dass zwar die gleiche Grundschwingung, allerdings zeitlich versetzte Oberschwingungen entstehen, die sich zu einem gewissen Grad kompensieren lassen. Bei einer Anzahl n parallel geschalteter Umrichter lassen sich die Oberschwingungen zu einer höheren Frequenz, der n-fachen Frequenz, verschieben. Dadurch können diese einfacher beseitigt werden, bzw. sind aufgrund der hohen Frequenz schon gar nicht mehr störend.

Das zeitliche versetzte Takten wird auch als versetztes Takten, phase shifting oder interleaved Takten bezeichnet.

Der Erfindung liegt die Aufgabe zugrunde, ein Antriebssystem mit parallel angeordneten Umrichtern zu verbessern.

Diese Aufgabe wird durch ein Antriebssystem aufweisend eine elektrische Maschine mit mindestens einem Wicklungssystem und mindestens zwei Umrichter gelöst, wobei die Umrichter mit dem Wicklungssystem der elektrischen Maschine verbunden sind, wobei das Antriebssystem eine Common-Mode Drossel aufweist, die derart in Reihe zu den Umrichtern angeordnet ist, dass die Magnetfelder in der Common-Mode Drossel hervorgerufen durch die einzelnen gleichphasigen Anteile der Ströme durch die jeweiligen Umrichter zumindest teilweise kompensiert werden. Ferner wird die Aufgabe durch eine Windkraftanlage mit einem derartigen Antriebssystem gelöst, wobei die elektrische Maschine als Generator ausgebildet ist. Die Aufgabe wird weiter durch ein Verfahren zum Betreiben eines derartigen Antriebssystems oder einer derartigen Windkraftanlage gelöst, wobei die Umrichter oder zumindest Teile der Umrichter, insbesondere die netzseitigen Stromrichter der jeweiligen Umrichter, versetzt getaktet werden.

Weitere vorteilhafte Ausgestaltungen der Erfindung sind in den abhängigen Ansprüchen angegeben.

Der Erfindung liegt die Erkenntnis zugrunde, dass sich das Antriebssystem durch das Einbringen einer Common-Mode Drossel verbessern lässt. Eine Drossel kann die Ausbildung von Ausgleichsströmen verhindern. Ihre Impedanz steigt bekanntlich mit der Frequenz, so dass sich gerade die Ausbildung hochfrequenter Ausgleichsströme vermeiden lässt. Eine Common-Mode Drossel wird auch als stromkompensierte Drossel oder als Gleichtaktdrossel bezeichnet. Die phasengleichen Ströme der Grundschwingung werden durch die Common-Mode Drossel kompensiert. Damit muss die Drossel von ihrem Magnetkreis nur auf die Oberschwingungen ausgelegt werden. Da diese in ihrer Amplitude deutlich geringer sind als die Grundschwingungsströme kann die Drossel besonders klein und kompakt ausgeführt werden. Gleichzeitig lassen sich hohe Induktivitätswerte für die Oberschwingungen erzielen, da der Magnetkreis in der Drossel nur für die Ausgleichsströme ausgelegt werden müssen. Die Kompensation der Grundschwingungsanteile der Ströme aufgrund des Common-Mode Charakters der Drossel führt dazu, dass diese relativ hohen Magnetanteile für die Drossel nicht berücksichtigt werden müssen. Mit dieser Drossel lässt sich dadurch die Ausbildung von Ausgleichsströmen zwischen den Umrichtern vermeiden, da auch die Induktivität hinreichend groß gewählt werden kann, ohne dass die Drossel dabei groß, schwer und teuer wird. Mit anderen Worten ist eine solche Drossel klein, leicht und kostengünstig. Damit ist auch eine galvanische Trennung, beispielsweise über separate Wicklungssysteme in der elektrischen Maschine für jeden Umrichter nicht mehr erforderlich. Gleichzeitig können die Umrichter, sowohl der netzseitige Stromrichter und/oder der maschinenseitige Stromrichter, versetzt takten, was zu einer zumindest teilweisen Kompensation der Störströme führt. Das Takten wirkt sich dann beim netzseitigen Stromrichter auf die Netzströme, beim maschinenseitigen Stromrichter auf die Ströme durch die elektrische Maschine aus. Die Störströme treten aufgrund desversetzten Taktens der parallelen Stromrichter dann bei höheren Frequenzen auf, die sich wiederum durch die Common-Mode Drossel mit relativ geringer Induktivität begrenzen lassen, da die Impedanz einer Drossel mit zunehmender Frequenz steigt. Dadurch kann auf die Verwendung eines Netzfilters, beispielsweise ausgebildet als Saugkreis, verzichtet werden.

Die Common-Mode Drossel kann beispielsweise durch 3AC-Drosseln ggf. mit weiteren Schenkeln oder auch durch 1AC Drosseln realisiert werden.

Dabei sind die Umrichter maschinenseitig parallel angeordnet und mit dem Wicklungssystem der elektrischen Maschine verbunden. Maschinenseitig bedeutet in diesem Zusammenhang, dass die Umrichter an dem Ausgang, an dem sie mit der elektrischen Maschine verbunden sind, parallel angeordnet sind, so dass sich die Ströme der parallelen Stromrichter überlagern. Die elektrische Maschine kann auch mehrere Wicklungssysteme aufweisen, wobei mindestens eines der Wicklungssysteme mit mindestens zwei parallel angeordneten Umrichtern verbunden ist.

Besonders vorteilhaft ist die Verwendung der Common-Mode Drossel, da sich dadurch die bekannten Vorteile von nur einem Wicklungssystem für mehrere parallel angeordnete Umrichter und gleichzeitig das versetzte Takten nutzen lässt, ohne unverhältnismäßig große und damit teure Drosseln vorsehen zu müssen. Durch das insbesondere netzseitige versetzte Takten kann auf eine große Netzdrossel und einen Saugkreis mit seinen schwingfähigen Elementen Spule und Kondensator verzichtet werden. Die Gefahr von Schwingungsanregung im Saugkreis entfällt darüber hinaus. Die Anzahl der Wicklungssysteme in der elektrischen Maschine, insbesondere in dem Generator, muss nicht auf die Anzahl der Teilstromrichter abgestimmt sein. Bei einer Anwendung in einer Windkraftanlage vereinfacht sich dabei die Verkabelung zwischen Generator und Stromrichter, die üblicherweise durch den ganzen Turm geführt werden muss, erheblich. Teilweise sind hier 150m oder mehr für die Verkabelung vom Fuße des Turms, an dem die Umrichter angeordnet sind bis zum oberen Ende, an dem der Generator angeordnet ist, vorzusehen. Durch nur ein Wicklungssystem im Generator kann der Aufwand für die teure Verkabelung deutlich reduziert werden.

Besonders vorteilhaft ist es, dass die maschinenseitigen Stromrichter galvanisch miteinander verbunden sind. Durch den Einsatz der Common-Mode Drossel ist eine galvanische Trennung der maschinenseitigen Anschlüsse der Umrichter nicht erforderlich. Somit kann auf den Einsatz von unterschiedlichen Wicklungssystemen für die jeweiligen Umrichter in der elektrischen Maschine verzichtet werden. Auch die maschinenseitigen Stromrichter können vorteilhafterweise versetzt getaktet werden um Harmonische in den maschinenseitigen Strömen zu hohen Frequenzen zu verschieben und damit die Amplitude dieser Ströme bei gegebener Induktivität der elektrischen Maschine zu verringern. Alternativ ist es auch möglich, die maschinenseitigen Stromrichter zeitgleich anzusteuern, wenn die Harmonischen keine unzulässig hohe Belastung der elektrischen Maschine darstellen. Es kann die elektrische Maschine mit nur einem Wicklungssystem ausgeführt werden, mit dem die Umrichter verbunden werden. Ebenso ist es möglich, mehrere Wicklungssysteme vorzusehen an denen jeweils mehrere, das heißt mindestens zwei, Umrichter angeschlossen sind. Durch die Ausgestaltung der elektrischen Maschine mit nur einem oder wenigen Wicklungssystemen wird die elektrische Maschine deutlich kostengünstiger und weniger anfällig für Fehler.

Bei einer vorteilhaften Ausgestaltung der Erfindung ist die Common-Mode Drossel zwischen den Umrichtern und einem Netzanschluss angeordnet. Durch die Anordnung der Common-Mode Drossel zwischen Umrichter und Netzanschluss kann die Common-Mode Drossel zusätzlich zur Reduzierung der Oberschwingungen im Netzstrom verwendet werden. Dadurch wirkt die Common-Mode Drossel nicht nur positiv auf die Ausgleichsströme, sondern auch positiv auf die Netzströme. Eine Filterschaltung, insbesondere ein Saugkreis, am Netzanschluss kann dadurch deutlich kleiner dimensioniert werden oder sogar komplett entfallen.

Bei einer weiteren vorteilhaften Ausgestaltung der Erfindung weist das Antriebssystem eine Steuerung auf, mit der zumindest Teile der Umrichter versetzt taktbar sind. Durch die Common-Mode Drossel werden die Ausgleichsströme zwischen den Umrichtern derart stark reduziert, dass die Umrichter zeitlich versetzt angesteuert werden können, d.h. versetzt getaktet werden können, ohne dass die Ausgleichsströme unzulässig hohe Werte annehmen. Durch das zeitlich versetzte Takten ergeben sich Vorteile im Netzstrom, insbesondere im Hinblick auf die Harmonischen, die sich zu höheren Frequenzen verschieben. Auch durch diese Maßnahme kann eine Filterschaltung, insbesondere ein Saugkreis, am Netzanschluss dadurch deutlich kleiner dimensioniert werden oder sogar komplett entfallen.

Bei einer weiteren vorteilhaften Ausgestaltung der Erfindung ist das Antriebssystem filterfrei, insbesondere saugkreisfrei, ausgebildet. Die Common-Mode Drossel kann die Ausbildung von Harmonischen im Netzstrom hinreichend stark reduzieren. Durch die Auslegung des Magnetkreises der Common-Mode Drossel allein auf die Oberschwingungen, kann diese auch eine hohe Induktivität aufweisen, so dass damit Harmonische im Netzstrom stärker reduziert werden können. Auch durch ein versetztes Takten der netzseitigen Stromrichter lässt sich eine Filterschaltung kleiner dimensionieren oder kann komplett entfallen.

Bei einer weiteren vorteilhaften Ausgestaltung der Erfindung werden die Umrichter derart betrieben, dass sich Ströme einstellen, deren Grundschwingungen sich derart in der Common-Mode Drossel überlagern, dass die dadurch entstehenden Magnetfelder sich gegenseitig zumindest teilweise, insbesondere vollständig, kompensieren. Dabei erzeugen die Stromrichter jeweils an ihrem wechselspannungsseitigen Ausgang eine Spannung, die diese Ströme hervorrufen. Die Aufteilung des Grundschwingungsstroms der elektrischen Maschine auf die einzelnen Umrichter kann vorteilhafterweise so gewählt werden, dass die in der Common-Mode Drossel bildenden Magnetfelder der Grundschwingung sich vollständig kompensieren. Damit sind die Verluste in der Common-Mode Drossel besonders gering und das Antriebssystem hat einen hohen Wirkungsgrad.

Im Folgenden wird die Erfindung anhand der in den Figuren dargestellten Ausführungsbeispiele näher beschrieben und erläutert. Es zeigen:
- FIG 1: ein Ausführungsbeispiel eines Antriebssystems und
- FIG 2: eine Windkraftanlage.

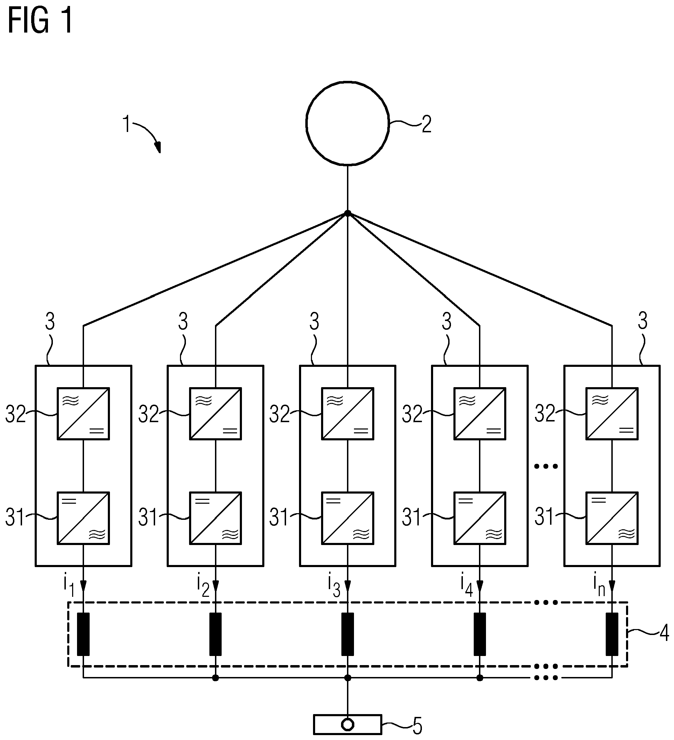

Die FIG 1 zeigt ein Antriebssystem 1 mit einer elektrischen Maschine 2, die ein Wicklungssystem aufweist, dass von mehreren, Umrichtern 3, gespeist wird. Diese Umrichter 3 sind maschinenseitig parallel angeordnet. Dabei kann es sich um eine 3phasige oder auch um eine einphasige Verbindung handeln. Netzseitig sind die Umrichter 3 mit einer Common-Mode Drossel 4 verbunden. Die Ströme i₁, ..., iₙ durch die Umrichter, die Anteile des Magnetfeldes in der Common-Mode Drossel 4 erzeugen, sind ebenfalls gekennzeichnet. Die Common-Mode Drossel 4 ist dann mit dem Netzanschluss 5 verbunden. Hervorzuheben ist, dass zwischen der Common-Mode Drossel 4 und Netzanschluss 5 auf ein Filter verzichtet werden kann.

Die Umrichter 3 weisen einen netzseitigen Stromrichter 31 und einen maschinenseitigen Stromrichter 32 auf. Der netzseitige Stromrichter 31 und der maschinenseitige Stromrichter 32 sind jeweils über einen Zwischenkreis innerhalb des Umrichters 3 miteinander verbunden. Darüber hinaus kann der Umrichter 3 einen hier nicht dargestellten Bremssteller aufweisen, mit dem elektrische Energie über einen Widerstand in Wärme umgesetzt werden kann. Dies ist beispielsweise bei dem Einsatz in einer Windkraftanlage vorteilhaft, wenn bei Ausfall des mit dem Netzanschluss 5 verbundenen Energieversorgungsnetzes die Rotorblätter verschleißfrei abgebremst werden sollen.

Die Anordnung der Common-Mode Drossel zwischen den Umrichtern und dem Netzanschluss wirkt sich positiv und zwar dämpfend auf die Oberschwingungen der Netzströme aus, insbesondere dann, wenn die netzseitigen Stromrichter versetzt getaktet werden. Alternativ ist es auch möglich, die Common-Mode Drossel 4 zwischen den Umrichtern 3 und der elektrischen Maschine 2 anzuordnen. Auch dadurch wird die Ausbildung von Ausgleichsströmen zwischen den Umrichtern 3 zuverlässig verhindert.

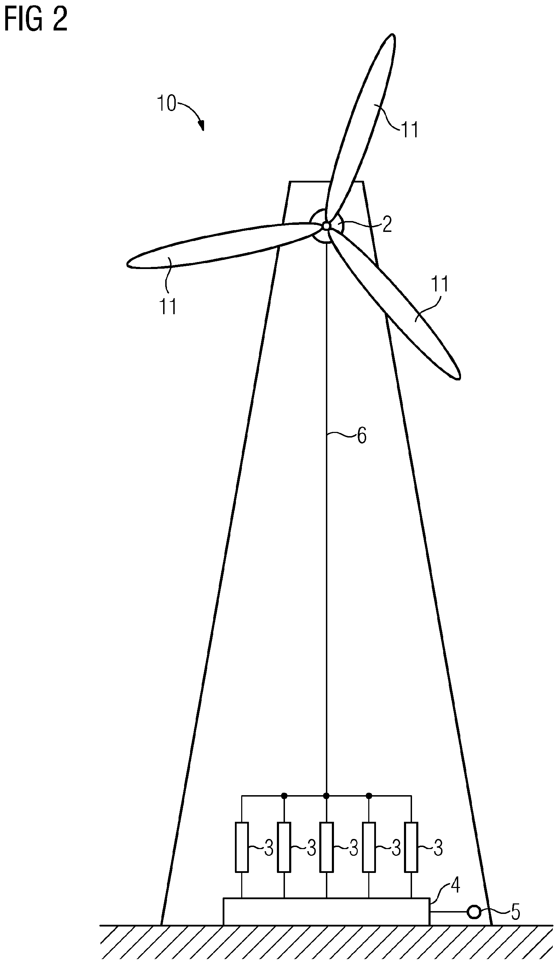

Die FIG 2 zeigt eine Windkraftanlage 10, die ein entsprechendes Antriebssystem 1 mit elektrischer Maschine 2, ausgebildet als Generator, Umrichtern 3, Common-Mode Drossel 4 und Netzanschluss 5 aufweist. Die elektrische Maschine 2 ist im oberen Teil zur Aufnahme der Windenergie aus den Rotorblättern 11 angeordnet. Die elektrische Energie wird über eine Verkabelung 6 an die im Fuße des Turms angeordneten Umrichter 3 übertragen. Diese sind, wie zuvor bereits in FIG 1 beschrieben, vorteilhafterweise über die Common-Mode Drossel mit dem Netzanschluss 5 verbunden. Da die elektrische Maschine 2 in diesem Ausführungsbeispiel nur ein Wicklungssystem aufweist, kann die Parallelschaltung der maschinenseitigen Anschlüsse der Umrichter bereits am Fuß vorgenommen werden. Damit reduziert sich der Aufwand der Verkabelung im Vergleich mit einem Generator, der für jeden Umrichter ein separates Wicklungssystem aufweist, deutlich. Auch wenn der Generator mehrere Wicklungssysteme aufweist, an denen jeweils zwei oder mehr Umrichter parallel angeschlossen sind, vereinfacht sich die Verkabelung gegenüber einer Anwendung bei der ein Stromrichter jeweils ein Wicklungssystem speist und die elektrische Maschine daher eine hohe Anzahl von Wicklungssystemen umfasst.

Zusammenfassend betrifft die Erfindung ein Antriebssystem aufweisend
- eine elektrische Maschine mit mindestens einem Wicklungssystem und
- mindestens zwei Umrichter
wobei die Umrichter mit dem Wicklungssystem der elektrischen Maschine verbunden sind. Zur Verbesserung des elektrischen Antriebssystems wird vorgeschlagen, dass das Antriebssystem eine Common-Mode Drossel aufweist, die derart in Reihe zu den Umrichtern angeordnet ist, dass die Magnetfelder in der Common-Mode Drossel hervorgerufen durch die einzelnen gleichphasigen Anteile der Ströme durch die jeweiligen Umrichter zumindest teilweise kompensiert werden. Ferner betrifft die Erfindung eine Windkraftanlage mit einem derartigen Antriebssystem, wobei die elektrische Maschine als Generator ausgebildet ist. Die Erfindung betrifft weiter ein Verfahren zum Betreiben eines derartigen Antriebssystems oder einer derartigen Windkraftanlage, wobei die Umrichter oder zumindest Teile der Umrichter, insbesondere die netzseitigen Stromrichter der jeweiligen Umrichter, versetzt getaktet werden.

## Patentansprüche

1. Antriebssystem (1) aufweisend
- eine elektrische Maschine (2) mit mindestens einem Wicklungssystem und
- mindestens zwei Umrichter (3),
wobei die Umrichter (3) mit dem Wicklungssystem der elektrischen Maschine (2) verbunden sind
**dadurch gekennzeichnet, dass** das Antriebssystem (1) eine Common-Mode Drossel (4) aufweist, die derart in Reihe zu den Umrichtern (3) angeordnet ist, dass die Magnetfelder in der Common-Mode Drossel (4) hervorgerufen durch die einzelnen gleichphasigen Anteile der Ströme (i₁,...,iₙ) durch die jeweiligen Umrichter (2) zumindest teilweise kompensiert werden.

2. Antriebssystem (1) nach Anspruch 1, wobei die Common-Mode Drossel (4) zwischen den Umrichtern (3) und einem Netzanschluss (5) angeordnet ist.

3. Antriebssystem (1) nach einem der Ansprüche 1 oder 2, wobei das Antriebssystem (1) eine Steuerung aufweist, mit der zumindest Teile der Umrichter (3) versetzt taktbar sind.

4. Antriebssystem (1) nach einem der Ansprüche 1 bis 3, wobei das Antriebssystem (1) filterfrei, insbesondere saugkreisfrei, ausgebildet ist.

5. Windkraftanlage (10) mit einem Antriebssystem nach einem der Ansprüche 1 bis 4, wobei die elektrische Maschine (2) als Generator ausgebildet ist.

6. Verfahren zum Betreiben eines Antriebssystems (1) nach einem der Ansprüche 1 bis 4 oder einer Windkraftanlage (10) nach Anspruch 5, wobei die Umrichter (3) oder zumindest Teile der Umrichter (3), insbesondere die netzseitigen Stromrichter (31) der jeweiligen Umrichter (3), versetzt getaktet werden.

7. Verfahren nach Anspruch 6, wobei die Umrichter (3) derart betrieben werden, dass sich Ströme (i₁,...,iₙ) durch die jeweiligen Umrichter (2) einstellen, deren Grundschwingungen sich derart in der Common-Mode Drossel (4) überlagern, dass die dadurch entstehenden Magnetfelder sich gegenseitig zumindest teilweise, insbesondere vollständig, kompensieren.
